# EUROPÄISCHE PATENTSCHRIFT

(11) **EP 2 556 265 B1**
(45) Veröffentlichungstag und Bekanntmachung des Hinweises auf die Patenterteilung: **19.12.2018**
(21) Anmeldenummer: 11710701.1
(22) Anmeldetag: 21.03.2011
(51) Int. Cl.: F16D 11/10

(54) **GETRIEBE MIT KUPPLUNG**
TRANSMISSION WITH CLUTCH
BOÎTE DE VITESSES AVEC ACCOUPLEMENT

(30) Priorität: 09.04.2010 DE 102010014582
(43) Veröffentlichungstag der Anmeldung: 13.02.2013
(73) Patentinhaber: Sew-Eurodrive GmbH & Co. KG, 76646 Bruchsal (DE)
(72) Erfinder: BÜHN, Oliver, 76703 Kraichtal (DE); MORITZ, Thorsten, 76698 Ubstadt-Weiher (DE); BENDER, Josef, 76684 Östringen (DE)
(86) Internationale Anmeldenummer: PCT/EP2011/001371
(87) Internationale Veröffentlichungsnummer: WO 2011/124324

(56) Entgegenhaltungen:
- US-A- 4 789 366
- US-A- 4 945 780
- US-A1- 2007 137 967
- US-B1- 6 401 560
- US-B1- 6 817 461

## Beschreibung

Die Erfindung betrifft ein Getriebe mit Kupplung, **eine Laufkatze und eine Elektrohängebahn.**

Aus der DE 195 00 503 A1 ist ein Transportsystem mit elektrischen Fördereinheiten bekannt, deren angetriebene Laufkatze aus einem Rumpf, einem ungebremsten Motor, einem Treibrad, kleinen Leitrollen und einem Stromabnehmer besteht. Bei Unterbrechung der Stromversorgung des Motors ist jede Fördereinheit frei verschiebbar.

**Aus der** US 6 401 560 A1 **ist als nächstliegender Stand der Technik ein Schiebemechanismus für einen Außenbordmotor bekannt.**

**Aus der** US 4 945 780 A1 **ist ein Antriebsmechanismus für einen Einschienenbahnwagen bekannt.**

**Aus der** US 6 817 461 B1 **ist ein Kupplungsmechanismus bekannt.**

Der Erfindung liegt die Aufgabe zugrunde, ein Getriebe mit Kupplung weiterzubilden, wobei die Kupplung sicher schaltet, einfach zu betätigen ist und kompakt baut.

Erfindungsgemäß wird die Aufgabe bei dem Getriebe nach den in Anspruch 1 angegebenen Merkmalen gelöst.

Merkmale der Erfindung bei dem Getriebe sind, dass die Kupplung einen Schaltnocken, ein Schaltelement und ein Federelement aufweist, wobei das Schaltelement durch Drehen des Schaltnockens um die Drehachse des Schaltnockens zwischen mindestens zwei Schaltpositionen gegen oder mit einer auf das Schaltelement wirkenden Federkraft des Federelementes hin und her bewegbar ist, wobei der Schaltnocken zwei Schaltflächen aufweist, und die Schaltflächen mit dem Schaltelement derart zusammenwirken, dass der Betrag der auf das Schaltelement wirkenden Federkraft in Abhängigkeit vom Drehwinkel des Drehens in jeder Schaltposition ein lokales Minimum annimmt. Von Vorteil dabei ist, dass die Schaltpositionen sicher gehalten werden, die Kupplung einfach zu betätigen ist und auch in kompakte Getriebe einbaubar ist.

Bei einer vorteilhaften Ausgestaltung wirkt der Schaltnocken mit dem Schaltelement derart zusammen, dass beim Drehen des Schaltnockens auf das Schaltelement zwischen den mindestens zwei Schaltpositionen bei mindestens einer Drehposition des Schaltnockens eine maximale Federkraft wirkt, welche größer ist als die lokalen Minima der Federkraft der Schaltpositionen. Von Vorteil dabei ist, dass die Kupplung nicht selbsttätig schaltet und somit die Sicherheit erhöht ist.

Bei einer vorteilhaften Ausgestaltung korrespondieren die zwei Schaltflächen zu einer Fläche des Schaltelements, wobei in einem der mindestens zwei Schaltzustände die entsprechende Schaltfläche gegen die Fläche drückt. Von Vorteil dabei ist, dass die Kupplung kompakt ist und die Schaltpositionen gehalten werden.

Bei einer vorteilhaften Ausgestaltung ist in einem zweiten der mindestens zwei Schaltzustände die zugehörige Schaltfläche parallel bis annähernd parallel von der Fläche beabstandet. Von Vorteil dabei ist, dass insbesondere im eingekuppelten Zustand die Kupplung reibungsfrei oder zumindest reibungsarm ist.

Bei einer vorteilhaften Ausgestaltung sind die zwei Schaltflächen an einem Endbereich des Schaltnockens angeordnet. Von Vorteil dabei ist, dass die Kupplung einfach zu montieren ist.

Bei einer vorteilhaften Ausgestaltung ist der Schaltnocken im Wesentlichen zylinderförmig. Von Vorteil dabei ist, dass die Kupplung sehr kompakt ist.

Erfindungsgemäß sind die Schaltflächen eben und/oder parallel zur Drehachse angeordnet. Von Vorteil dabei ist, dass die Kupplung einfach zu fertigen ist.

Erfindungsgemäß sind die Schaltflächen zueinander in einem Winkel angeordnet, vorzugsweise im Wesentlichen senkrecht zueinander angeordnet. Von Vorteil dabei ist, dass eine wohldefinierte, einfache Bewegung zum Schalten der Kupplung genügt.

Bei einer vorteilhaften Ausgestaltung bildet der Endbereich einen Zylinderabschnitt, aus welchem zwei Scheibensegmente zur Bildung der Schaltflächen an einem freien Ende des Endbereiches ausgenommen sind. Von Vorteil dabei ist, dass die Kupplung kompakt ist und einfach zu fertigen ist.

Bei einer vorteilhaften Ausgestaltung schließt sich an den Endbereich ein Durchführungsbereich des Schaltnockens an, welcher eine zur Drehachse radial umlaufende Nut zur Aufnahme eines Dichtungselementes, insbesondere eines O-Ringes, aufweist. Von Vorteil dabei ist, dass das Gehäuse gut abgedichtet ist und die Kupplung einfach zu montieren und kompakt ist.

Bei einer vorteilhaften Ausgestaltung weist der dem Endbereich gegenüberliegende Endabschnitt des Schaltnockens eine Befestigungseinrichtung für einen Betätigungshebel auf. Von Vorteil dabei ist, dass die Kupplung kompakt baut und einfach zu schalten ist.

Bei einer vorteilhaften Ausgestaltung ist das Schaltelement durch das Drehen des Schaltnockens in einer Richtung senkrecht zur Drehachse des Schaltnockens zwischen einer Einkuppelposition und einer Auskuppelposition hin und her bewegbar. Von Vorteil dabei ist, dass die Kupplung kompakt baut und einfach zu montieren ist.

Bei einer vorteilhaften Ausgestaltung ist das Schaltelement drehfest und axial verschiebbar mit einer Welle des Getriebes verbindbar. Von Vorteil dabei ist, dass die Kupplung sicher schaltet, da das Schaltelement sicher geführt ist.

Erfindungsgemäß ist das Schaltelement mit einem Zahnrad des Getriebes, vorzugsweise formschlüssig, drehfest verbindbar und wieder lösbar. Von Vorteil dabei ist, dass die Kupplung einfach und sicher in ein Getriebe einbaubar ist.

Merkmale des Getriebes mit einer oben beschriebenen Kupplung sind, dass der Schaltnocken, insbesondere mit seinem Durchführungsabschnitt, in einer Gehäusewand eines Gehäuses des Getriebes gehalten ist, wobei die Schaltflächen und das Schaltelement in einem Innenraum des Gehäuses angeordnet sind. Von Vorteil dabei ist, dass die Kupplung einfach in das Getriebe integrierbar ist und sicher schaltet.

Erfindungsgemäß ist das Schaltelement auf einer Welle, insbesondere Abtriebswelle, des Getriebes drehfest und axial verschiebbar angeordnet, wobei die Federkraft das Schaltelement in Richtung eines Zahnrades, welches drehbar auf der Welle angeordnet ist, drückt, wobei das Schaltelement im eingekuppelten Zustand drehfest mit dem Zahnrad verbunden ist, insbesondere Klauen des Schaltelementes und dazu korrespondierende Klauen in einer Stirnfläche des Zahnrades gegenseitig ineinandergreifen. Von Vorteil dabei ist, dass die Kupplung einfach und sicher schaltbar ist.

Erfindungsgemäß ist am Schaltnocken außerhalb des Getriebegehäuses ein Schalthebel angeordnet, mit welchem der Schaltnocken gedreht wird, insbesondere wobei eine Kraftkomponente vom Schaltnocken auf das Schaltelement, welche durch die Gewichtskraft des Schalthebels hervorgerufen ist, in jeder Lage des Getriebes kleiner ist, als die Federkraft auf das Schaltelement. Von Vorteil dabei ist, dass die Kupplung einfach zu betätigen ist und sicher in der geschaltete Schaltposition verbleibt.

Merkmale einer Laufkatze für eine Elektrohängebahn mit einem oben beschriebenen Getriebe sind, dass das Getriebe von einem Motor der Laufkatze angetrieben ist und ein Laufrad der Laufkatze mit der Welle des Getriebes drehfest verbunden ist. Von Vorteil dabei ist, dass das Getriebe einfach per Hand zu betätigen ist.

Merkmale einer Elektrohängebahn sind, dass eine oben beschriebene Laufkatze verwendet wird. Von Vorteil ist dabei, dass die Elektrohängebahn sicher betreibbar ist. Als weiterer Vorteil ergibt sich, dass eine Fördereinheit der Elektrohängebahn mit einer Laufkatze, welche eine oben beschriebenes Getriebe mit einer erfindungsgemäßen Kupplung aufweist bei einem Stromausfall sicher in der Position verbleibt und erst durch Betätigen der Kupplung frei verschiebbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand eines Ausführungsbeispiels mit Bezugnahme auf die Zeichnung näher erläutert. Es zeigen rein schematisch:
- Fig.1:: eine dreidimensionale Ansicht mit Teilschnitt eines Getriebes mit einer erfindungsgemäßen Kupplung;
- Fig. 2:: eine dreidimensionale Ansicht eines Schaltnockens für eine erfindungsgemäße Kupplung;
- Fig. 3:: eine weitere dreidimensionale Ansicht des in Figur 2 gezeigten Schaltnockens;
- Fig. 4:: eine Seitenansicht des in Figur 2 gezeigten Schaltnockens;
- Fig. 5:: einen Schnitt durch den in Figur 2 gezeigten Schaltnocken;

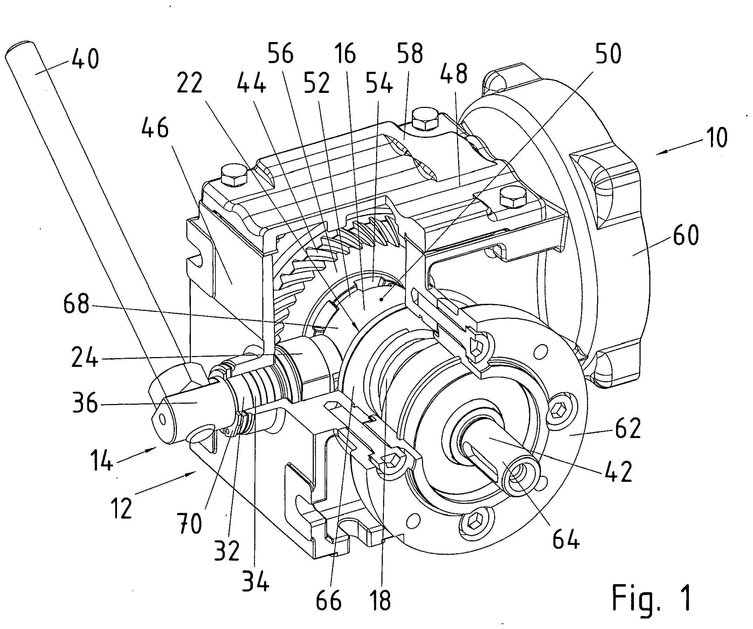

In der Figur 1 ist eine erfindungsgemäße Kupplung 12 in einem Getriebe 10 gezeigt. Das Getriebe 10 umfasst ein Gehäuse 48, welches einen Innenraum 50 umschließt. Das Gehäuse 48 weist einen Deckel 58, einen Eintriebsflansch 60 und einen Abtriebsflansch 62 auf. Am Eintriebsflansch 60 ist zum Beispiel ein nicht gezeigter Elektromotor anflanschbar. Am Abtriebsflansch 62 ist beispielsweise eine nicht gezeigte Treibrad-Einheit für eine Elektrohängebahn anbringbar.

Das Getriebe 10 umfasst weiter ein Ritzel welches mit einem Zahnrad 44 des Getriebes 10 kämmt. Das Ritzel und das Zahnrad 44 sind im Gehäuse 48 angeordnet. Die Welle 42 ist insbesondere als Abtriebswelle ausgeführt. Einen Wellenstumpf 64 der Abtriebswelle ragt durch den Abtriebsflansch 62 aus dem Gehäuse 48 heraus.

Das Zahnrad 44 ist drehbar auf der Welle 42 des Getriebes 10 angeordnet. Um zwischen einem drehfesten Zustand und einem gegeneinander drehbaren Zustand der Welle 42 relativ zum Zahnrad 44 zu schalten, weist das Getriebe 10 die Kupplung 12 auf.

Dazu weist die Kupplung 12 einen Schaltnocken 14, ein Schaltelement 16 und ein Federelement 18 auf.

Das Schaltelement 16 ist drehfest, aber axial verschiebbar auf der Welle 42 angeordnet. Das Schaltelement 16 ist vorzugsweise als Rohrabschnitt 68 ausgeführt, welches die Welle 42 umgibt. Zur drehfesten Verbindung mit der Welle 42 weist der Rohrabschnitt 68 zum Beispiel eine Innenverzahnung auf, welche in eine Verzahnung auf der Welle 42 eingreift, so dass dadurch das Schaltelement 16 auf der Welle 42 axial verschiebbar ist. Die Innenverzahnung und die Verzahnung sind so ausgeführt, dass diese in jeder möglichen axialen Stellung des Schaltelementes 16 zumindest teilweise in Eingriff bleiben. Dazu verlaufen die Zahnkämme der Verzahnung und der Innenverzahnung in axialer Richtung.

An seinem zum Abtriebsflansch 62 hingerichteten Endstück weist der Rohrabschnitt 68 einen flanschartigen Kragen 66 auf, welcher einstückig mit dem Rohrabschnitt 68 ausgeführt ist. Der Flanschartige Kragen bildet eine zum Zahnrad 44 hingerichtete Fläche 22 und steht vorzugsweise senkrecht zur Achse der Welle 42. Die Fläche 22 weist bei dem in Figur 1 gezeigten Ausführungsbeispiel die Form eines Rings auf.

Die zum Zahnrad 44 gerichtete Stirnseite des Rohrabschnitts 68 weist Klauen 52 auf. An der zum Schaltelement 16 gerichteten Stirnfläche 56 des Zahnrads 44 sind korrespondierende Klauen 54 ausgeformt. Durch axiales hin- und herschieben des Schaltelementes 16 schaltet die Kupplung 12 zwischen einer eingekuppelten Schaltposition, bei welcher die Klauen 52 in die korrespondierenden Klauen 54 eingreifen und einer ausgekuppelten Position , bei welcher die Klauen 52 und die korrespondierenden Klauen 54 voneinander beabstandet sind. Somit ist das Schaltelement 16 mit dem Zahnrad 44 des Getriebes 10, vorzugsweise formschlüssig, drehfest verbindbar und wieder lösbar ist.

Der Schaltnocken 14 weist vorteilhafterweise eine zylindrische Grundform auf. Die Bewegung des Schaltelementes 16 in axialer Richtung wird durch Drehen des Schaltnockens 14 um eine Drehachse 26 des Schaltnockens 14 bewirkt. Dazu ist der Schaltnocken 14 mit einem Durchführungsbereich 32 drehbar in einer Gehäusewand 46 des Gehäuses 48 gehalten.

Der Durchführungsbereich 32 weist insbesondere eine Nut 34 auf, welche radial umläuft und in welcher ein Abdichtungselement, wie zum Beispiel ein O-Ring, gehalten ist. Dadurch ist die Durchführung in der Gehäusewand 46, in welcher der Durchführungsbereich 32 gehalten ist abgedichtet. Bei der in Figur 1 gezeigten Ausführungsform ist die Durchführung durch eine zylindrische Ausstülpung der Gehäusewand 46 nach außen verlängert ausgeführt. Dadurch ist der Schaltnocken 14 sicherer in der Gehäusewand 46 gehalten.

In axialer Richtung der Drehachse 26 ist der Schaltnocken 14 in der Gehäusewand 46 fixiert. Dies ist zum Beispiel bei der in Figur 1 gezeigten Ausführungsform dadurch realisiert, dass der Endbereich 24 dicker ausgeführt ist als der Durchführungsbereich 32, insbesondere dicker als die Durchführung. Außerhalb des Gehäuses 48 ist am Schaltnocken 14 ein Sicherungselement, vorzugsweise ein Sicherungsring 70, angeordnet. Es sind aber auch andere Sicherungselemente, wie beispielsweise Splinte, Sicherungsscheiben oder Keile denkbar.

Das Federelement 18 drückt mit einer Federkraft auf das Schaltelement 16 in Richtung zum Zahnrad 44, also hin zur eingekuppelten Schaltposition. Dazu ist das Federelement 18 vorzugsweise als Spiraldruckfeder zwischen dem Schaltelement 16 und einem Abtriebslager, welches die Welle 42 drehbar im Gehäuse 48 lagert, angeordnet. Die Spiraldruckfeder umschließt die Welle 42 und stützt sich vorteilhafterweise auf einem Außenring des Abtriebslagers ab.

Der Schaltnocken 14 weist zwei Schaltflächen 20 auf. Die Schaltflächen 20 wirken derart mit dem Schaltelement 16 zusammen, dass die auf das Schaltelement 16 wirkende Federkraft in Abhängigkeit vom Drehwinkel des Drehens des Schaltnockens 14 in jeder Schaltposition ein lokales Minimum annimmt.

Dazu sind zum Beispiel die beiden Schaltflächen 20 an dem Endbereich 24 des Schaltnockens 14 ausgeformt. Der Endbereich 24 schließt sich an den Durchführungsbereich 32 an und liegt innerhalb des Gehäuses 48. Zur Ausbildung der Schaltflächen 20 sind in einem Abschnitt 28 des ansonsten zylinderförmigen Endbereichs 24 zwei Scheibensegmente 30 ausgenommen. Diese scheibensegmentartigen Ausnehmungen schließen sich direkt an die Stirnseite des Schaltnockens 14 an. Die Scheibensegmente 30 weisen unterschiedliche Segmenthöhen auf und sind so angeordnet, dass die, vorteilhafterweise abgefaste, Stirnkante 72 des Endbereiches 24 zwischen den Scheibensegmenten 30 an jeweils mindestens einer Stelle dem eigentlichen Kreisumfang des zylinderförmigen Endbereiches 24 entspricht.

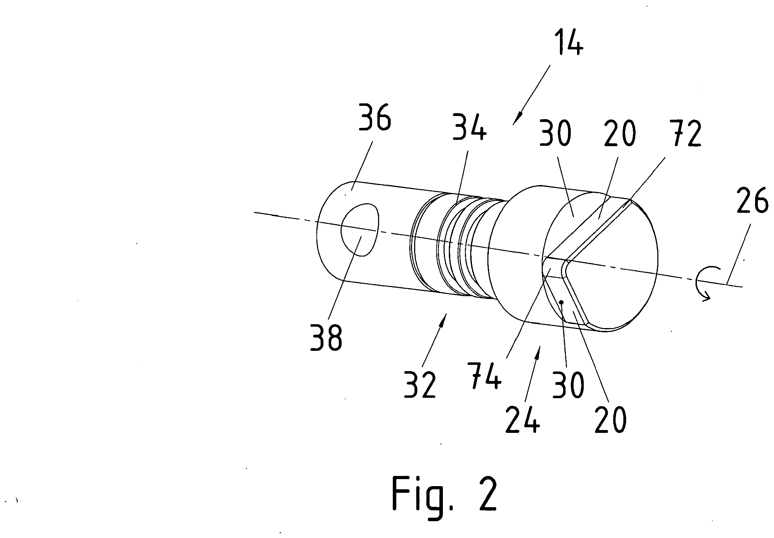

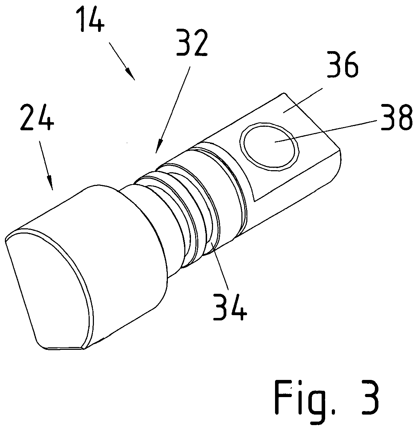

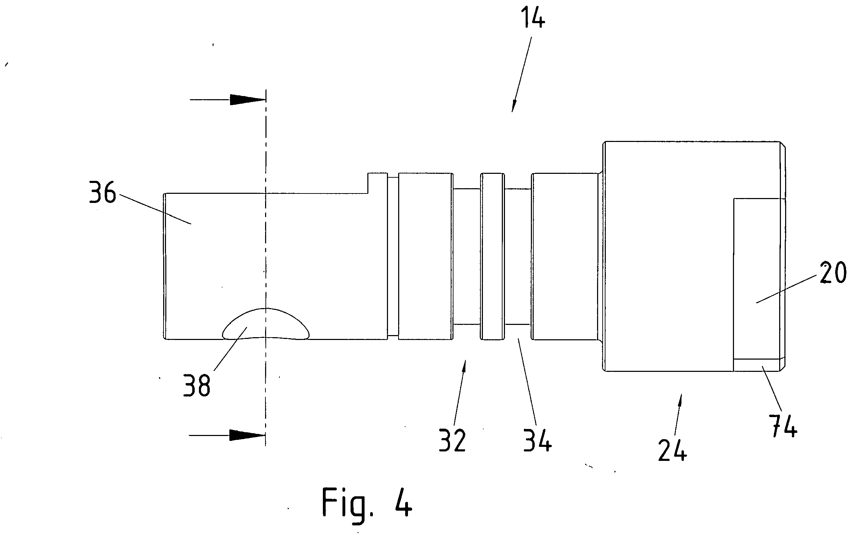

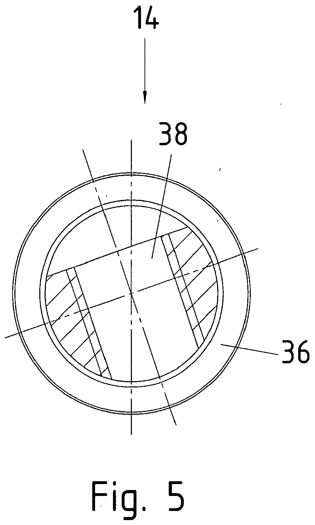

Bei der in den Figuren 2 bis 5 gezeigten Ausführungsform des Schaltnockens 14 liegen die Schaltflächen 20 als Ebenen parallel zur Drehachse 26. Die Schaltflächen 20 bilden einen rechten Winkel zueinander. Die Stoßkante 74, an welcher die zwei Schaltflächen 20 aneinander stoßen, ist vorteilhafterweise abgerundet ausgeführt.

Der Schaltnocken 14 ragt so weit in das Gehäuse 48 hinein und ist relativ zum Schaltelement 16 derart angeordnet, dass sich ein Umfangsflächenabschnitt des Endbereiches 24, welcher die Schaltflächen 20 umfasst, mit einem Teilbereich der Fläche 22 überlappt. Vorzugsweise steht die Drehachse 26 senkrecht zur Achse der Welle 42, beziehungsweise zur Bewegungsrichtung des Schaltelementes 16.

Im eingekuppelten Zustand liegt die Schaltfläche der zwei Schaltflächen 20, welche durch das Scheibensegment der zwei Scheibensegmente 30 mit der größeren Segmenthöhe gebildet ist, der Fläche 22 des Schaltelementes 18 im Wesentlichen planparallel gegenüber. Zwischen dieser Schaltfläche und der Fläche 22 ist insbesondere in der eingekuppelten Schaltposition Spiel vorhanden, so dass zum einen die Fläche 22 nur bei leichter Verdrehung des Schaltnockens 14 unerheblich am Schaltnocken 14 reibt und zum anderen die Federkraft voll über das Schaltelement 16 auf das Zahnrad 44 geleitet ist. Dazu greifen die Klauen 52 und die korrespondierenden Klauen 54 sicher ineinander.

Das Klauenprofil der Klauen 52 und der korrespondierenden Klauen 54 sind so ausgeführt, dass sie selbsthemmend gegen eine Verdrehung wirken. Andererseits können bei anderen Ausführungsbeispielen das Klauenprofil und die Federkraft so gewählt werde, dass ab einem bestimmten übertragenen Drehmoment die Kupplung 12 durchrutscht.

Beim Drehen des Schaltnockens 14 tritt nun zwangsläufig ein Teilabschnitt des Umfangsflächenabschnitts in Kontakt mit der Fläche 22 und der Schaltnocken 14 drückt das Schaltelemente 16 beim Weiterdrehen aus der eingekuppelten Schaltposition gegen die Federkraft in eine Position in welcher die Klauen 52 und die korrespondierenden Klauen 54 nicht mehr in Eingriff stehen. Somit besteht keine drehfeste Verbindung zwischen dem Zahnrad 44 und der Welle 42 mehr. Beim Weiterdrehen wird eine Position des Schaltelementes 16 erreicht, in welcher die Federkraft in Bezug auf die Bewegung des Schaltelementes 16 maximal ist.

Nach dieser Position mit maximaler Kraft drückt die Feder das Schaltelement 16 wieder in Richtung des Zahnrades 44, bis die Fläche 22 gegen die andere der zwei Schaltflächen 20 drückt. Nun hat das Schaltelement 16 die ausgekuppelte Schaltposition erreicht. Die Federkraft wird über das Schaltelement 16 und den Schaltnocken 14 vom Gehäuse 48 aufgenommen. Wird nun die Welle 42 gedreht, so reibt die Fläche 22 auf derjenigen Schaltfläche der zwei Schaltflächen 20, welche durch das Scheibensegment der Scheibensegmente 30 mit der geringeren Segmenthöhe gebildet ist.

Somit ist das Schaltelement 16 durch Drehen des Schaltnockens 14 um die Drehachse 26 des Schaltnockens 14 zwischen mindestens zwei Schaltpositionen gegen oder mit der auf das Schaltelement 16 wirkenden Federkraft des Federelementes 18 hin und her bewegbar.

Ausgehend von der eingekuppelten Schaltposition entsteht bei einer vollständigen Umdrehung des Schaltnockens 14 folgender Kraftverlauf. Zuerst ist die Spiraldruckfeder innerhalb der zugelassenen Bewegung am weitesten ausgelenkt und somit die Federkraft minimal. Beim Drehen des Schaltnockens 14 wird das Schaltelement 16 vom Zahnrad 44 weggedrückt und die Schraubendruckfeder gestaucht.

Die Federkraft steigt bis der mit der Fläche 22 in Kontakt stehende Bereich des Umfangsflächenabschnitts einer ersten maximalen radialen Erstreckung des Schaltnockens 14 beziehungsweise des Umfangsflächenabschnitts entspricht.

Danach nimmt die Federkraft wieder ab bis die Fläche 22 gegen die Schaltfläche, welcher der ausgekuppelten Schaltposition entspricht, gedrückt wird. Beim Weiterdrehen drückt der Schaltnocken 14 das Schaltelement 16 wieder weg vom Zahnrad 44. Dadurch nimmt die Federkraft wieder zu bis eine zweite maximale radiale Erstreckung des Schaltnockens 14 beziehungsweise des Umfangsflächenabschnitts erreicht wird. Bei einem Zylinderförmigen Endbereich 24 ist die erste maximale radiale Erstreckung insbesondere gleich der zweiten maximalen radialen Erstreckung. Durch diese Ausführungsart liegt die ausgekuppelte Schaltposition in Abhängigkeit des Drehwinkels in einem lokalen Minimum der Federkraft.

Die Kupplung 12 ist auf zwei verschiedene Arten schaltbar. Entweder durch vollständiges Drehen des Schaltnockens 14 um 360 Grad oder durch hin und her drehen zwischen den beiden durch die Schaltflächen 20 bestimmten Schaltpositionen bestimmten Drehpositionen des Schaltnockens 14 schaltbar. Letztere Möglichkeit unterteilt sich noch in die zwei möglichen Richtungen der Drehung.

Die lokalen Minima sind vorzugsweise echte lokale Minima, d.h. die Funktionswerte in der Umgebung der Minima sind größer und nicht gleich dem Wert der lokalen Minima.

Zur leichteren Betätigung des Schaltnockens 14 ist ein dem Endbereich 24 gegenüberliegende Endabschnitt 36 des Schaltnockens 14 eine Befestigungseinrichtung 38 für einen Schalthebel 40 ausgeformt. Vorzugsweise ist die Befestigungseinrichtung 38 als eine durchgehende Ausnehmung im Endabschnitt 36 ausgeführt. Die durchgehende Ausnehmung weist ein Innengewinde auf. In das Innengewinde ist ein passendes Außengewinde des Schalthebels 40 einschraubbar.

Vorzugsweise ist an dem Außengewinde des Schalthebels 40 eine Kontermutter vorgesehen, welche gegen einen abgeplatteten Bereich des im Wesentlichen zylinderförmigen Endabschnitts 36 drückt. Dadurch wird ein selbstständiges herausdrehen des Schalthebels 40 aus dem Innengewinde verhindert.

Um ein selbsttätiges Schalten der Kupplung 12 zu verhindern, ist der Schalthebel 40 derart ausgeführt, dass eine Kraftkomponente der Gewichtskraft des Schalthebels 40, welche über den Schaltnocken 14 auf das Schaltelement 16 wirkt, kleiner als die Federkraft ist. Insbesondere ist diese Bedingung bei jeder Lage beziehungsweise Einbaulage des Getriebes 10 erfüllt. Dies hat den weiteren Vorteil, dass ein Anschlag für den Schalthebel 40 unnötig ist. Die Kupplung 12 lässt sich auch durch ein vollständiges umdrehen des Schalthebels 40 betätigen.

Vorteilhafterweise ist das Getriebe 10 bei einer Laufkatze für eine Elektrohängebahn eingesetzt. Das Getriebe 10 ist dafür mit einem Motor der Laufkatze verbunden. Die Abtriebswelle des Getriebes 10 wird von dem Motor angetrieben. Ein Laufrad der Laufkatze ist mit der Abtriebswelle des Getriebes 10 drehfest verbunden. Bei einem Störfall ist es wichtig, dass die Förderelemente der Elektrohängebahn frei beweglich sind. Dazu lässt sich per Hand die drehfeste Verbindung der Abtriebswelle und dem Motor mit der Kupplung 12 trennen. So wird verhindert, dass sich das Förderelement von alleine bewegt, aber trotzdem gezielt bewegbar ist. Somit ist die Sicherheit der Elektrohängebahn erhöht.

### Bezugszeichenliste

- 10: Getriebe
- 12: Kupplung
- 14: Schaltnocken
- 16: Schaltelement
- 18: Federelement
- 20: Schaltflächen
- 22: Fläche
- 24: Endbereich
- 26: Drehachse
- 28: Abschnitt
- 30: Scheibensegment
- 32: Durchführungsbereich
- 34: Nut
- 36: Endabschnitt
- 38: Befestigungseinrichtung
- 40: Schalthebel
- 42: Welle
- 44: Zahnrad
- 46: Gehäusewand
- 48: Gehäuse
- 50: Innenraum
- 52: Klauen
- 54: korrespondierende Klauen
- 56: Stirnfläche
- 58: Deckel
- 60: Eintriebsflansch
- 62: Abtriebsflansch
- 64: Wellenstumpf
- 66: flanschartiger Kragen
- 68: Rohrabschnitt
- 70: Sicherungsring
- 72: Stirnkante
- 74: Stoßkante

## Patentansprüche

1. **Getriebe mit Kupplung,**
wobei die Kupplung einen Schaltnocken (14), ein Schaltelement (16) und ein Federelement (18) aufweist,
wobei das Schaltelement (16) durch Drehen des Schaltnockens (14) um die Drehachse des Schaltnockens (14) zwischen mindestens zwei Schaltpositionen gegen oder mit einer auf das Schaltelement (16) wirkenden Federkraft des Federelementes (18) hin und her bewegbar ist,
wobei der Schaltnocken (14) zwei Schaltflächen aufweist, und
die Schaltflächen mit dem Schaltelement (16) derart zusammenwirken, dass die auf das Schaltelement (16) wirkende Federkraft in Abhängigkeit vom Drehwinkel des Drehens in jeder Schaltposition ein lokales Minimum annimmt,
wobei **das Schaltelement (16) mit einem Zahnrad (44) des Getriebes, vorzugsweise formschlüssig, drehfest verbindbar und wieder lösbar ist,**
**der Schaltnocken (14), insbesondere mit seinem Durchführungsabschnitt, in einer Gehäusewand eines Gehäuses des Getriebes gehalten ist,**
**wobei die Schaltflächen und das Schaltelement (16) in einem Innenraum des Gehäuses angeordnet sind,**
**wobei das Schaltelement (16) auf einer Welle, insbesondere Abtriebswelle, des Getriebes drehfest und axial verschiebbar angeordnet ist,**
**wobei die Federkraft das Schaltelement (16) in Richtung eines Zahnrades, welches drehbar auf der Welle (42)angeordnet ist, drückt, wobei das Schaltelement (16) im eingekuppelten Zustand drehfest mit dem Zahnrad verbunden ist, insbesondere Klauen (52) des Mitnehmers und dazu korrespondierende Klauen (54) in einer Stirnfläche des Zahnrades gegenseitig ineinandergreifen,**
**wobei am Schaltnocken (14) außerhalb der Getriebegehäuses ein Schalthebel angeordnet ist, mit welchem der Schaltnocken (14) gedreht wird, insbesondere wobei ein Kraftkomponente vom Schaltnocken (14) auf das Schaltelement (16), welche durch die Gewichtskraft des Schalthebels hervorgerufen ist, in jeder Lage des Getriebes kleiner ist als die Federkraft auf das Schaltelement (16),**
**dadurch gekennzeichnet, dass**
**die Schaltflächen eben sind und parallel zur Drehachse angeordnet sind,**
- **wobei die Schaltflächen zueinander in einem Winkel angeordnet sind, vorzugsweise im Wesentlichen senkrecht zueinander angeordnet sind,**
- **und/oder wobei ein Endbereich einen Abschnitt aufweist, aus welchem zwei Scheibensegmente zur Bildung der Schaltflächen an einem freien Ende des Endbereiches ausgenommen sind.**

2. **Getriebe** nach Anspruch 1,
**dadurch gekennzeichnet, dass**
der Schaltnocken (14) mit dem Schaltelement (16) derart zusammenwirkt, dass beim Drehen des Schaltnockens (14) auf das Schaltelement (16) zwischen den mindestens zwei Schaltpositionen bei mindestens einer Drehposition des Schaltnockens (14) eine maximale Federkraft wirkt.

3. **Getriebe** nach Anspruch 1 oder 2,
**dadurch gekennzeichnet, dass**
die zwei Schaltflächen zu einer Fläche des Schaltelements korrespondieren, wobei in einem der mindestens zwei Schaltzustände die entsprechende Schaltfläche gegen die Fläche drückt.

4. **Getriebe** nach Anspruch 1, 2 oder 3,
**dadurch gekennzeichnet, dass**
in einem zweiten der mindestens zwei Schaltzustände die zugehörige Schaltfläche parallel bis annähernd parallel von der Fläche beabstandet ist,
und/oder
die zwei Schaltflächen an dem Endbereich des Schaltnockens (14) angeordnet sind.

5. **Getriebe** nach einem der vorrangegangenen Ansprüche,
**dadurch gekennzeichnet, dass**
**der Schaltnocken (14) zylinderförmig ist.**

6. **Getriebe** nach einem der vorrangegangenen Ansprüche,
**dadurch gekennzeichnet, dass**
sich an den Endbereich ein Durchführungsbereich des Schaltnockens (14) anschließt, welcher eine zur Drehachse radial umlaufende Nut zur Aufnahme eines Dichtungselementes, insbesondere eines O-Ringes, aufweist,
und/oder
der dem Endbereich gegenüberliegende Endabschnitt das Schaltnockens (14) eine Befestigungseinrichtung für einen Betätigungshebel aufweist.

7. **Getriebe** nach einem der vorrangegangenen Ansprüche,
**dadurch gekennzeichnet, dass**
das Schaltelement (16) durch das Drehen des Schaltnockens (14) in einer Richtung senkrecht zur Drehachse des Schaltnockens (14) zwischen einer Einkuppelposition und einer Auskuppelposition hin und her bewegbar ist.

8. **Getriebe** nach einem der vorrangegangenen Ansprüche,
**dadurch gekennzeichnet, dass**
das Schaltelement (16) drehfest und axial verschiebbar mit einer Welle (42) des Getriebes verbindbar ist.

9. Laufkatze für eine Elektrohängebahn mit einem Getriebe nach einem der Ansprüche 1 bis 8, wobei das Getriebe von einem Motor der Laufkatze angetrieben ist und ein Laufrad der Laufkatze mit der Welle des Getriebes drehfest verbunden ist.

10. Elektrohängebahn mit einer Laufkatze nach Anspruch 9.

## Claims

1. A gear mechanism with coupling,
wherein the coupling has a switching cam (14), a switching element (16) and a spring element (18),
wherein the switching element (16) can be moved back and forth between at least two switching positions counter to or with a spring force of the spring element (18) which acts on the switching element (16) by turning the switching cam (14) about the axis of rotation of the switching cam (14),
wherein the switching cam (14) has two switching faces, and
the switching faces cooperate with the switching element (16) such that the spring force which acts on the switching element (16) assumes a local minimum dependent on the angle of rotation of the turning in each switching position,
wherein
the switching element (16) can be connected, preferably in positive manner, non-rotatably to and released again from a gear wheel (44) of the gear mechanism,
the switching cam (14), in particular with its lead-through portion, is held in a housing wall of a housing of the gear mechanism,
wherein the switching faces and the switching element (16) are arranged in an inner space of the housing,
wherein the switching element (16) is arranged non-rotatably and axially displaceably on a shaft, in particular output shaft, of the gear mechanism,
wherein the spring force presses the switching element (16) in the direction of a gear wheel which is arranged rotatably on the shaft (42), wherein the switching element (16) in the engaged state is connected non-rotatably to the gear wheel, in particular claws (52) of the entraining means and corresponding claws (54) mutually intermesh in an end face of the gear wheel,
wherein there is arranged on the switching cam (14) outside the gear mechanism housing a switching lever with which the switching cam (14) is turned, in particular wherein a force component from the switching cam (14) onto the switching element (16), which is caused by the weight of the switching lever, in each position of the gear mechanism is smaller than the spring force on the switching element (16),
**characterised in that**
the switching faces are flat and are arranged parallel to the axis of rotation,
- the switching faces being arranged at an angle to each other, preferably being arranged substantially perpendicularly to each other,
- and/or with an end region having a portion out of which two disc segments are taken to form the switching faces at one free end of the end region.

2. A gear mechanism according to Claim 1,
**characterised in that**
the switching cam (14) cooperates with the switching element (16) such that upon turning the switching cam (14) a maximum spring force acts on the switching element (16) between the at least two switching positions at at least one rotary position of the switching cam (14).

3. A gear mechanism according to Claim 1 or 2,
**characterised in that**
the two switching faces correspond to a face of the switching element, with the corresponding switching face pressing against the face in one of the at least two switching states.

4. A gear mechanism according to Claim 1, 2 or 3,
**characterised in that**
in a second one of the at least two switching states the associated switching face is spaced apart parallel to approximately parallel from the face,
and/or
the two switching faces are arranged on the end region of the switching cam (14).

5. A gear mechanism according to one of the preceding claims,
**characterised in that**
the switching cam (14) is cylindrical.

6. A gear mechanism according to one of the preceding claims,
**characterised in that**
a lead-through region of the switching cam (14) adjoins the end region, which lead-through region has a groove radially circumambient to the axis of rotation for receiving a seal element, in particular an O-ring,
and/or
the end portion of the switching cam (14) lying opposite the end region has a fastening means for an actuating lever.

7. A gear mechanism according to one of the preceding claims,
**characterised in that**
the switching element (16) can be moved back and forth between an engagement position and a disengagement position by the turning of the switching cam (14) in a direction perpendicular to the axis of rotation of the switching cam (14).

8. A gear mechanism according to one of the preceding claims,
**characterised in that**
the switching element (16) can be connected non-rotatably and axially displaceably to a shaft (42) of the gear mechanism.

9. A trolley for a telpher having a gear mechanism according to one of Claims 1 to 8,
wherein the gear mechanism is driven by a motor of the trolley and a running wheel of the trolley is connected non-rotatably to the shaft of the gear mechanism.

10. A telpher having a trolley according to Claim 9.

## Revendications

1. Transmission avec accouplement,
sachant que l'accouplement présente une came de commutation (14), un élément de commutation (16) et un élément formant ressort (18),
sachant que, par rotation de la came de commutation (14) autour de l'axe de rotation de la came de commutation (14), l'élément de commutation (16) peut être déplacé en va-et-vient entre au moins deux positions de commutation à l'encontre d'une ou avec une force de ressort de l'élément formant ressort (18) agissant sur l'élément de commutation (16),
sachant que la came de commutation (14) présente deux surfaces de commutation,
et que les surfaces de commutation coopèrent avec l'élément de commutation (16) de telle sorte que la force de ressort agissant sur l'élément de commutation (16) adopte un minimum local dans chaque position de commutation en fonction de l'angle de rotation de la rotation,
sachant
que l'élément de commutation (16) peut être relié en solidarité de rotation, de préférence par engagement positif, à une roue d'engrenage (44) de la transmission, et peut en être à nouveau libéré,
que la came de commutation (14), en particulier par sa partie traversante, est maintenue dans une paroi de carter d'un carter de la transmission,
sachant que les surfaces de commutation et l'élément de commutation (16) sont disposés dans un espace intérieur du carter,
sachant que l'élément de commutation (16) est disposé en solidarité de rotation et à translation axiale sur un arbre, en particulier un arbre de sortie, de la transmission, sachant que la force de ressort de l'élément de commutation (16) exerce une pression en direction d'une roue d'engrenage qui est disposée à rotation sur l'arbre (42), sachant que l'élément de commutation (16), dans l'état accouplé, est relié en solidarité de rotation à la roue d'engrenage, en particulier des crabots (52) de l'entraîneur et des crabots correspondants (54) dans une face frontale de la roue d'engrenage sont en prise mutuelle,
sachant qu'un levier de commutation, par lequel la came de commutation (14) est mise en rotation, est disposé à l'extérieur du carter de transmission sur la came de commutation (14), sachant en particulier qu'une composante de force de la came de commutation (14) sur l'élément de commutation (16), qui est produite par la force massique du levier de commutation, est inférieure à la force de ressort exercée sur l'élément de commutation (16) dans chaque position de la transmission,
**caractérisée en ce que** les surfaces de commutation sont planes et sont disposées parallèlement à l'axe de rotation,
- sachant que les surfaces de commutation sont disposées sous un angle l'une par rapport à l'autre, de préférence sont disposées sensiblement perpendiculairement entre elles,
- et/ou sachant qu'une région terminale présente une partie à partir de laquelle sont évidés deux segments de disque afin de former les surfaces de commutation à une extrémité libre de la région terminale.

2. Transmission selon la revendication 1, **caractérisée en ce que** la came de commutation (14) coopère avec l'élément de commutation (16) de telle sorte que, lors de la rotation de la came de commutation (14), une force de ressort maximale agit sur l'élément de commutation (16) entre les au moins deux positions de commutation à au moins une position de rotation de la came de commutation (14).

3. Transmission selon la revendication 1 ou 2, **caractérisée en ce que** les deux surfaces de commutation correspondent avec une surface de l'élément de commutation, sachant que dans un des au moins deux états de commutation, la surface de commutation correspondante exerce une pression contre ladite surface.

4. Transmission selon la revendication 1, 2 ou 3, **caractérisée en ce que**, dans un deuxième des au moins deux états de commutation, la surface de commutation associée est distante parallèlement à approximativement parallèlement de ladite surface, et/ou les deux surfaces de commutation sont disposées sur la région terminale de la came de commutation (14).

5. Transmission selon l'une des revendications précédentes, **caractérisée en ce que** la came de commutation (14) est cylindrique.

6. Transmission selon l'une des revendications précédentes, **caractérisée en ce qu'**une région de traversée de la came de commutation (14) se raccorde à la région terminale, région qui présente une rainure périphérique radialement à l'axe de rotation, destinée à recevoir un élément d'étanchéité, en particulier un anneau torique d'étanchéité,
et/ou la partie terminale de la came de commutation (14) qui est opposée à la région terminale présente un dispositif de fixation pour un levier d'actionnement.

7. Transmission selon l'une des revendications précédentes, **caractérisée en ce que** l'élément de commutation (16) peut, par la rotation de la came de commutation (14) dans une direction perpendiculaire à l'axe de rotation de la came de commutation (14), être déplacé en va-et-vient entre une position d'accouplement et une position de désaccouplement.

8. Transmission selon l'une des revendications précédentes, **caractérisée en ce que** l'élément de commutation (16) peut être relié en solidarité de rotation et à translation axiale à un arbre (42) de la transmission.

9. Chariot roulant pour un transporteur aérien électrique avec une transmission selon l'une des revendications 1 à 8,
sachant que la transmission est entraînée par un moteur du chariot roulant et qu'une roue de roulement du chariot roulant est reliée en solidarité de rotation à l'arbre de la transmission.

10. Transporteur aérien électrique avec un chariot roulant selon la revendication 9.
